# EUROPEAN PATENT APPLICATION

(11) **EP 2 806 159 A1**
(43) Date of publication of application: **26.11.2014**
(21) Application number: 12866000.8
(22) Date of filing: 18.01.2012
(51) Int. Cl.: F03D 9/00, F03D 7/04

(54) **WIND POWER GENERATING SYSTEM**

(71) Applicant: Hitachi, Ltd., Tokyo 100-8280 (JP)
(72) Inventor: IMAIE, Kazuhiro, Chiyoda-ku, Tokyo 100-8280 (JP); ICHINOSE, Masaya, Chiyoda-ku, Tokyo 100-8280 (JP)
(74) Representative: MERH-IP Matias Erny Reichl Hoffmann
(86) International application number: PCT/JP2012/000248
(87) International publication number: WO 2013/108288

(57) **Abstract**

An object of the present invention is to provide a Wind Turbine Generation System that eliminates the necessity of switching to a circuit different from the one used during a normal power generation operation even when Power grid voltage sags. To accomplish the above object, the Wind Turbine Generation System according to the present invention includes a wind turbine having blades rotating upon receipt of wind, a rotor connected to the blades, and a permanent magnet generator connected to the rotor, the permanent magnet generator generating electric power by rotating a rotator having a permanent magnet in accordance with the rotation of the rotor; auxiliary machinery and a wind turbine controller that control the wind turbine; a power converter that adjusts the electric power generated by the permanent magnet and supplies the adjusted electric power to the auxiliary machinery and to the wind turbine controller; a DC converter that is connected to the permanent magnet generator to convert AC power to DC power; and a control device that is connected to the DC converter to control the power converter by using the DC power obtained from conversion.

## Description

### Technical Field

The present invention relates to a Wind Turbine Generation System.

### Background Art

A Wind Turbine Generation System and a photovoltaic power grid system are rapidly becoming widespread as a renewable energy system. A conventional Wind Turbine Generation System is described, for example, in Patent Document 1. Patent Document 1 describes a technology for using an uninterruptible power supply for a Wind Turbine Generation System.

Patent document 2 describes a Wind Turbine Generation System having an emergency power supply mechanism that supplies electric power generated by the rotation of a wind turbine rotor to a pitch control mechanism in response to the occurrence of Power grid voltage sag. The emergency power supply mechanism described in Patent Document 2 supplies electric power to a pitch angle control mechanism in response to the occurrence of Power grid voltage sag.

### Prior Art Literature

### Patent Documents

Patent Document 1: U.S. Patent No. 6,921,985
Patent Document 2: JP-2007-239599-A

### Summary of the Invention

### Problems to be Solved by the Invention

The above two patent documents describe a function that is exercised to temporarily provide control power in the event of Power grid voltage sag. However, the described function exercises temporary control only in an emergency. In this instance, it is necessary to switch to a circuit that is different from the one used during a normal power generation operation. Therefore, it is obvious that a complex mechanism needs to be used for circuit switching. Such circuit switching is to be effected in an emergency. Therefore, if such circuit switching is not properly effected, it might be impossible to prevent equipment from being damaged or otherwise adversely affected.

In view of the above-described circumstances, it is an object of the present invention to provide a Wind Turbine Generation System that eliminates the necessity of switching to a circuit different from the one used during a normal power generation operation when Power grid voltage sags.

### Means for Solving the Problems

To accomplish the above object, a Wind Turbine Generation System according to the present invention includes a wind turbine that has blades for receiving wind, a rotor connected to the blades, a permanent magnet generator connected to the rotor, the permanent magnet generator generating electric power by rotating a rotator having a permanent magnet in accordance with the rotation of the rotor, and a power converter connecter to the generator to convert DC power to AC power with a commercial frequency, auxiliary machinery and a wind turbine controller that control the wind turbine, a power converter that adjusts the electric power generated by the permanent magnet and supplies the adjusted electric power to the auxiliary machinery and to the wind turbine controller, a DC converter that is connected to the permanent magnet generator to convert AC power to DC power, and a control device that is connected to the DC converter to control the power converter by using the DC power obtained from conversion.

### Advantageous Effect of the Invention

The present invention provides a Wind Turbine Generation System that eliminates the necessity of switching to a circuit different from the one used during a normal power generation operation when an Power grid voltage sags.

### Brief Description of the Drawings

FIG. 1 is a one-line diagram illustrating a Wind Turbine Generation System according to a first embodiment of the present invention.
FIG. 2 is a diagram illustrating a power converter.
FIG. 3 is a one-line diagram illustrating the Wind Turbine Generation System according to a second embodiment of the present invention.
FIG. 4 is a one-line diagram illustrating the Wind Turbine Generation System according to a third embodiment of the present invention.

### Mode for Carrying Out the Invention

Preferred embodiments of the above-described present invention will now be described with reference to the accompanying drawings. The following describes some exemplary embodiments only. The interpretation of the present invention is not limited to those described in conjunction with the following specific embodiments.

### First Embodiment

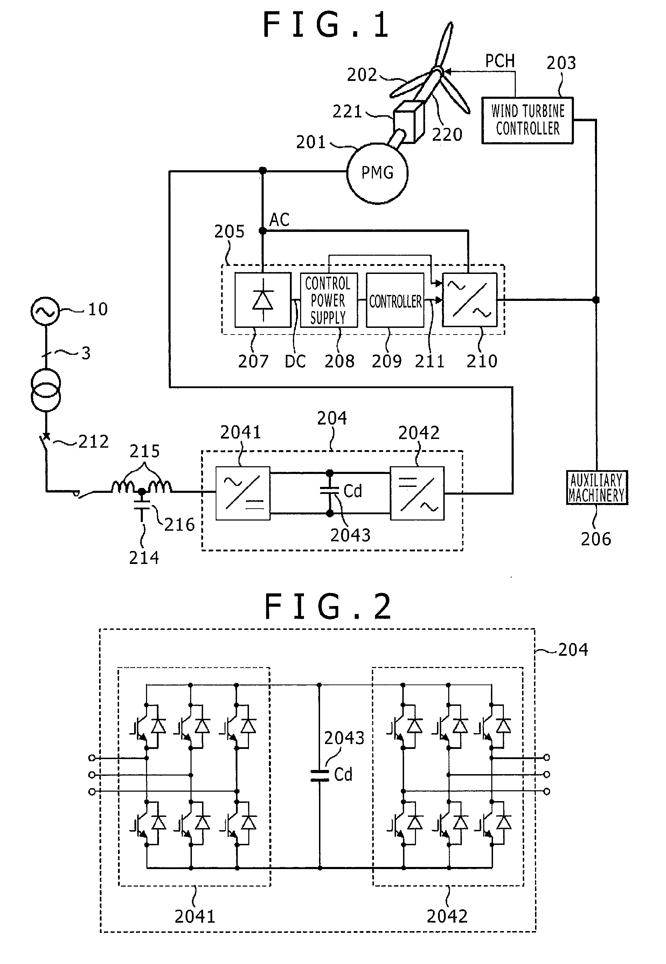

A Wind Turbine Generation System according to a first embodiment of the present invention will be described below with reference to FIGS. 1 and 2. The Wind Turbine Generation System according to the first embodiment includes a wind turbine that has three blades 202, which are circumferentially disposed at equal spacing intervals and adapted to rotate upon receipt of wind, a rotor 220 that is connected to the blades 202 and used as a rotary shaft for the blades 202, a gearbox 221 that is connected to the rotor 220 to increase a rotating speed, and a permanent magnet generator (PMG) 201 whose speed is increased through the gearbox 221; an auxiliary power supply 205 connected to the permanent magnet generator 201; auxiliary machinery 206 that exercises, for example, pitch angle control of the blades 202 (regulates a wind receiving area) upon receipt of electric power supplied from the auxiliary power supply 205 and yaw control to regulate the rotation angle in horizontal plane of a nacelle (not shown) disposed on top of a tower built on a foundation; a wind turbine controller 203 that outputs a command to the auxiliary machinery 206; a power converter 204 connected to the permanent magnet generator 201; an LC filter 214 that is connected to the power converter 204 to suppress harmonics; a breaker 212 that is connected to the LC filter 214 to stop the flow of an AC current; and a transformer 3 that is connected between the breaker 212 and a power grid system 10 to step up the voltage of electric power generated by the wind turbine and supply the resulting electric power to the power grid system 10. All the above-mentioned devices may be disposed in the wind turbine. Alternatively, some of them may be disposed outside of the wind turbine. Either of these two different configurations may be adopted depending, for instance, on the installation environment.

The auxiliary power supply 205 includes a diode bridge rectifier 207, a control power supply 208, and a control device 209. The diode bridge rectifier 207 rectifies AC power generated by the permanent magnet generator 201 in order to convert it to DC power. The DC power obtained from conversion by the diode bridge rectifier 207 is supplied to the control power supply 208. The control device 209 is driven by the control power supply 208 to control a power converter 210 disposed in the auxiliary power supply 205. Upon receipt of a command 211 from the control device 209, the power converter 210 supplies appropriate electric power to the auxiliary machinery 206.

FIG. 2 illustrates the configuration of the power converter 204. The power converter 204 includes a converter 2042, an inverter 2041, and smoothing capacitors 2043. The converter 2042 converts AC power generated by the permanent magnet generator 201 to DC power. The inverter 2041 is disposed closer to a power grid system side than the converter 2042 in order to convert the DC power obtained from conversion by the converter 2042 to AC power having a commercial frequency. The smoothing capacitors 2043 is disposed between the inverter 2041 and the converter 2042. The inverter and the converter each include six switching elements. The power converter 204 effects conversion to obtain electric power having an appropriate (high quality) frequency and waveform for transmission to the power grid system 10.

The LC filter 214 includes two coils 215 and a capacitor 216 disposed between the two coils 215. The LC filter 214 suppresses harmonics that are output from the power converter 204 to the power grid system 10.

Control exercised by the auxiliary machinery 206 when the wind turbine is operated for power generation will now be described. The wind turbine performs a power generation operation when the wind speed is not lower than (or is higher than) a cut-in speed and is not higher than (or is lower than) a cut-out speed, which is the speed of a storm wind. Specified values of the cut-in speed and cut-out speed vary from one model to another.

The present embodiment uses the permanent magnet generator 201 as a generator. Without excitation current, the permanent magnet generator 201 generates electric power while the rotor 202 is rotating. While a power generation operation is being performed, AC power generated by the permanent magnet generator 201 is applied to the diode bridge rectifier 207 in the auxiliary power supply 205 and to the power converter 210.

An alternating current applied to the diode bridge rectifier 207 is rectified and converted to DC power. This DC power is supplied to the control power supply 208 for the control device 209. DC power is used for the control power supply 208 because a microcomputer, a memory, an FPGA, and other ICs mounted on a control circuit board included in the control device operate from a direct current only. AC power generated by the permanent magnet generator 201 is applied to the power converter 210. However, as the control device 209 outputs the command 211 to the power converter 210, the AC power is converted to power having an appropriate waveform and frequency before being supplied to the auxiliary machinery 206 and to the wind turbine controller 203.

Upon receipt of electric power from the power converter 210, the auxiliary machinery 206 issues a command to the wind turbine controller 203 for the purpose of exercising pitch angle control and yaw control over the rotor 202 in accordance with the speed and direction of wind.

Electric power generated during a power generation operation of the wind turbine is transmitted from the permanent magnet generator 201 to the power grid system 10 through the power converter 204. In this instance, the converter 2042 and inverter 2041 in the power converter 204 convert the electric power to power having assured quality. Further, the LC filter 214 performs a filtering process to suppress harmonic noise generated from the power converter 204. Therefore, the quality of the resulting electric power is further improved. The breaker 212 is installed, for instance, to avoid the influence of an accident. The transformer 3, which is a step-up transformer, transforms the generated electric power having improved quality to a high voltage for the power grid system 10.

The present embodiment supplies the electric power generated by the permanent magnet generator 201 to the auxiliary power supply 205, which controls the wind turbine. This enables the auxiliary machinery 206 to exercise control, that is, provide overall control of the wind turbine, without regard to the status of the power grid system 10. In other words, even when the system voltage of the power grid system drops, the present embodiment does not need to switch to a circuit different from the one used during a normal power generation operation.

### Second Embodiment

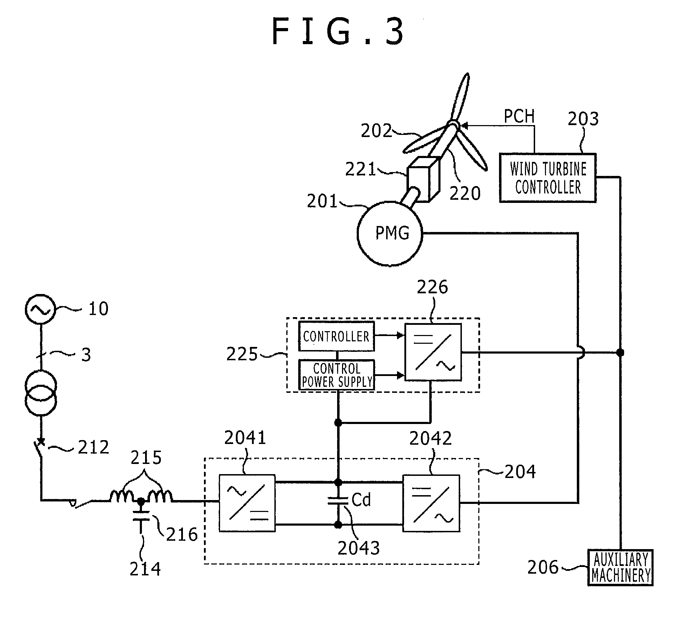

A second embodiment of the present invention will now be described with reference to FIG. 3. Elements identical with those of the first embodiment will not be redundantly described. Only the difference from the first embodiment will be described below.

In the first embodiment, the auxiliary power supply 205 is directly connected to the permanent magnet generator 201. In the second embodiment, however, an auxiliary power supply 225 is connected to a direct current part between the converter 2042 and inverter 2041 in the power converter 204.

Hence, a diode is disposed and connected in reverse parallel to the switching elements included in the converter 2042. Thus, the diode converts the generated electric power from AC power to DC power even if the converter 2042 does not perform a switching operation. This eliminates the necessity of using the diode bridge rectifier 207, which is required in the first embodiment to convert the generated electric power from AC power to DC power. As a result, the employed structure is simplified.

Further, in the first embodiment, AC power is applied to the auxiliary power supply 205. In the second embodiment, however, DC power is applied to the auxiliary power supply 205. Hence, a power converter 226 disposed in the auxiliary power supply 225 is merely requested to convert DC power to AC power. In other words, the functionality of the power converter 226 is half the functionality of the power converter used in the first embodiment. As a result, the employed configuration is simplified.

In the second embodiment, too, the electric power generated by the permanent magnet generator 201 is supplied to the auxiliary power supply 225, which controls the wind turbine. This enables the auxiliary machinery 206 to exercise control, that is, provide overall control of the wind turbine, without regard to the status of the power grid system 10.

### Third Embodiment

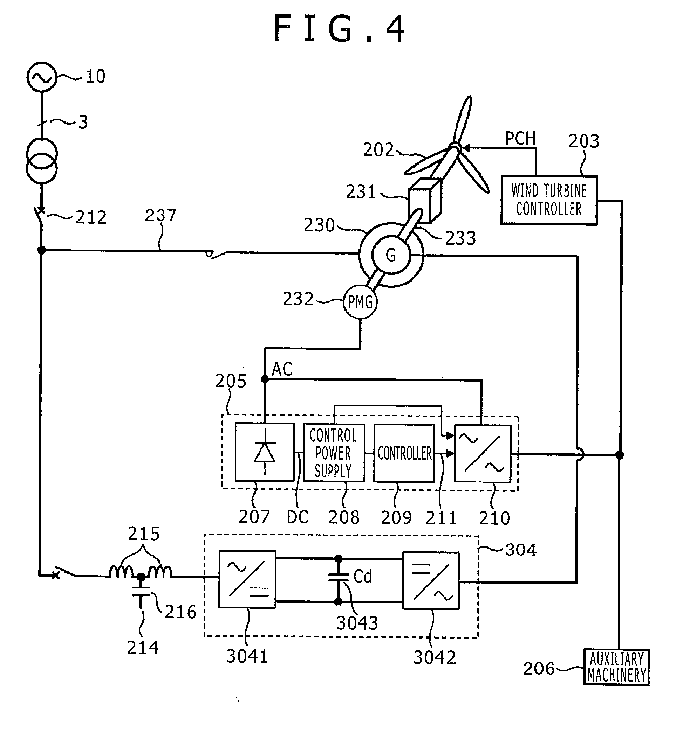

A third embodiment of the present invention will now be described with reference to FIG. 4. Elements identical with those of the first or second embodiment will not be redundantly described. Only the difference from the first and second embodiments will be described below.

The third embodiment uses a doubly-fed induction generator 230 in place of the permanent magnet generator 201, and provides a rotor 233 with a permanent magnet generator 232 that serves as an auxiliary generator. A power conversion device 304 is connected to a rotor of the doubly-fed induction generator 230 through converters 3041, 3042 by way of a slip ring. The gird-side converter 3041 is connected to the power grid system 10 in order to convert AC power to DC power. The machine-side converter 3042 is connected to the power grid system 10 in order to convert DC power to AC power and output the resulting AC power for properly controlling the output frequency and power factor of the doubly-fed induction generator 230. A stator of the doubly-fed induction generator 230 outputs the generated electric power to the power grid system 10 through the breaker.

A control power supply similar to the auxiliary power supply 205 in the first embodiment is connected to the permanent magnet generator 232. It is obvious that this change may be applied even when the permanent magnet generator 201 is used as a main generator as in the first embodiment.

In the third embodiment, too, the electric power generated by the permanent magnet generator 232 is supplied to the auxiliary power supply 205, which controls the wind turbine. This enables the auxiliary machinery 206 to exercise control, that is, provide overall control of the wind turbine, without regard to the status of the power grid system 10.

In each of the foregoing embodiments, the electric power generated by the permanent magnet generator is supplied to the auxiliary power supply. The permanent magnet generator is able to perform a power generation operation without requiring excitation electric power when it starts rotating (the fact that it does not require the excitation electric power particularly at startup is effective for performing an operation independently of the power grid system). This feature is beneficial because the wind turbine may be controlled by driving the auxiliary machinery without regard to the status of the power grid system.

Further, increased benefit will be obtained from the use of a downwind wind turbine, which performs a power generation operation while its rotor is oriented downwind. When the downwind wind turbine is used, the rotor is naturally oriented downwind as a weathercock even if yaw control (so-called free yaw control) is not exercised. This permits the rotor to switch into a position appropriate for power generation. Hence, even if no control power supply is available, the rotor is able to switch into a state where it is rotatable. Furthermore, the permanent magnet generator is able to start a power generation operation as described above as far as the rotor rotates. Therefore, when the rotor and the permanent magnet generator are used in combination, no excitation electric power is required for restarting the wind turbine. The wind turbine may be restarted while no electric power is supplied from the power grid system and no excitation electric power is available.

The above-mentioned feature is particularly beneficial in a case where the wind turbine is installed in a region without a power network or the power network is disrupted due, for instance, to a disaster.

### Description of Reference Numerals

- 201, 232: Permanent magnet generator
- 202: Blade
- 203: Wind turbine controller
- 204, 210, 226, 236: Power converter
- 205, 225, 235: Auxiliary power supply
- 206: Auxiliary machinery
- 207, 234: Diode bridge rectifier
- 208: Control power supply
- 209: Control device
- 211: Command
- 212: Breaker
- 214: LC filter
- 215: Coil
- 216, 2043: Smoothing capacitors
- 220, 233: Rotor
- 221, 231: Gearbox
- 230: Doubly-fed induction generator
- 237: Excitation power supply cable
- 2041: Inverter
- 2042: Converter
- 304: power converter
- 3041: grid-side converter
- 3042: machine-side converter

## Claims

1. A Wind Turbine Generation System comprising:
a wind turbine having blades rotating upon receipt of wind, a rotor connected to the blades, and a permanent magnet generator connected to the rotor, the permanent magnet generator generating electric power by rotating a rotator having a permanent magnet in accordance with the rotation of the rotor;
auxiliary machinery and a wind turbine controller that control the wind turbine;
a power converter that adjusts the electric power generated by the permanent magnet and supplies the adjusted electric power to the auxiliary machinery and to the wind turbine controller;
a DC converter that is connected to the permanent magnet generator to convert AC power to DC power; and
a control device that is connected to the DC converter to control the power converter by using the DC power obtained from conversion.

2. The Wind Turbine Generation System according to claim 1,
wherein the DC converter is disposed between the permanent magnet generator and the power converter; and
wherein DC power is applied to the power converter.

3. The Wind Turbine Generation System according to claim 1 or 2,
wherein the DC converter is a diode.

4. The Wind Turbine Generation System according to claim 1 or 2,
wherein the DC converter is a converter.

5. The Wind Turbine Generation System according to claim 4,
wherein the power converter is an inverter.

6. The Wind Turbine Generation System according to any one of claims 1 to 5, further comprising:
an inverter;
an LC filter that is connected to the inverter and provided with a coil and a capacitor;
a breaker connected to the LC filter; and
a transformer connected to the breaker;
wherein the high voltage side of the transformer is connected to a power grid system.

7. The Wind Turbine Generation System according to claim 6, further comprising:
an excitation generator; and
a converter that converts AC power generated by the excitation generator to DC power;
wherein the converter is connected to the inverter according to claim 6.

8. The Wind Turbine Generation System according to any one of claims 1 to 7,
wherein the wind turbine is a downwind wind turbine that generates electric power while the rotor is oriented downwind.
